# EUROPÄISCHE PATENTSCHRIFT

(11) **EP 2 710 573 B1**
(45) Veröffentlichungstag und Bekanntmachung des Hinweises auf die Patenterteilung: **28.02.2018**
(21) Anmeldenummer: 12719713.5
(22) Anmeldetag: 08.05.2012
(51) Int. Cl.: G08G 1/16, G06K 9/00, G06T 7/00

(54) **VERFAHREN UND VORRICHTUNG ZUM ERKENNEN EINES MÖGLICHEN KOLLISIONSOBJEKTES**
METHOD AND APPARATUS FOR IDENTIFYING A POSSIBLE COLLISION OBJECT
PROCÉDÉ ET DISPOSITIF PERMETTANT D'IDENTIFIER UN OBJET DE COLLISION ÉVENTUEL

(30) Priorität: 19.05.2011 DE 102011076112
(43) Veröffentlichungstag der Anmeldung: 26.03.2014
(73) Patentinhaber: Bayerische Motoren Werke Aktiengesellschaft, 80809 München (DE)
(72) Erfinder: ORECHER, Sebastian, 82296 Schöngeising (DE)
(86) Internationale Anmeldenummer: PCT/EP2012/058421
(87) Internationale Veröffentlichungsnummer: WO 2012/156228

(56) Entgegenhaltungen:
- EP-A1- 2 026 246
- EP-A1- 2 081 131
- EP-A1- 2 288 138
- DE-A1-102005 056 645

## Beschreibung

Die Erfindung betrifft ein Verfahren und eine Vorrichtung zum Erkennen eines möglichen Kollisionsobjektes in einem Bild, das von einer in einem Kraftfahrzeug angeordneten Aufnahmeeinheit erfasst wird, wobei die Aufnahmeeinheit ausgebildet ist, abhängig von dem erfassten Bild ein digitales Ursprungsbild mit einer vorgegebenen Bildgröße bereitzustellen. Ferner betrifft die Erfindung ein Erkennungssystem für ein Kraftfahrzeug.

Bei Nachtfahrten ist ein Sichtbereich eines Fahrzeugführers im Wesentlichen, bestimmt von einer Ausleuchtung der Fahrbahn mit Fahrzeugfrontscheinwerfern, wobei häufig temporär durch Blendlicht von Fahrzeugfrontscheinwerfern entgegenkommender Fahrzeuge die Nachtsicht verschlechtert wird. Ferner verlieren viele Fahrzeugführer bei Nacht einen gewissen Teil ihrer Sehfähigkeit. Daher werden moderne Kraftfahrzeuge zunehmend mit Nachtsichtsystemen ausgestattet. Nachtsichtsysteme werden typischerweise als entweder passive Nachtsichtsysteme oder aktive Nachtsichtsysteme klassifiziert. Passive Nachtsichtsysteme erfassen infrarotes Umgebungslicht, das von Objekten emittiert wird. Aktive Systeme verwenden beispielsweise eine Infrarotlichtquelle, um einen vorgegebenen Bereich in Fahrzeugvorwärtsrichtung zu beleuchten, und verarbeiten ein von den Objekten reflektiertes Infrarotlicht mit einer Spezialkamera in ein Wärmebild. In den überwiegenden Fällen werden die erfassten Wärmebilder mittels einer optischen Ausgabeeinheit, beispielsweise mit einem Display, das im Armaturenbrett angeordnet ist, oder einem Headup-Display angezeigt.

EP 2 026 246 A1 offenbart ein Verfahren und eine Vorrichtung zur Auswertung eines Bildes. Es werden Bilddaten, die das Bild repräsentieren, empfangen. Ferner werden Abstandsinformationen empfangen, die einen Abstand eines Objekts relativ zu einer Bildebene des Bildes repräsentieren. Zumindest ein Teil der Bildinformation wird erneut abgetastet abhängig von der Abstandsinformation und einem vorgegebenen Referenzabstand. Der Teil der Bilddaten, der erneut abgetastet wird, repräsentiert zumindest einen Teil des Objekts.

EP 2 081 131 A1 offenbart einen Detektor, der eine Bildaufnahmeeinheit umfasst, die auf einem Fahrzeug angeordnet ist, um ein Bild eines Objekts zu erhalten. Der Detektor umfasst eine Erfassungseinheit zum Erfassen eines Objekts in einem Objekterfassungsbereich in einem vorbestimmten Abstand von der Bildaufnahmeeinheit. Die Bildaufnahmeeinheit umfasst eine monokulare Kamera. Der vorbestimmte Abstand kann fest vorgegeben sein oder kann entsprechend der Fahrgeschwindigkeit des Fahrzeugs variiert werden. Eine Fußgängererkennung erfolgt durch einen Mustervergleich basierend auf einem neuronalen Netzwerk.

DE 10 2005 056 645 A1 offenbart eine Fahrzeugumgebungsüberwachungsvorrichtung, die einen in der Umgebung eines Fahrzeugs vorhandenen Körper als ein Objekt auf Grundlage eines durch eine Infrarotabbildungseinrichtung aufgenommenen Bildes extrahiert. Die Fahrzeugüberwachungsvorrichtung umfasst eine Extraktionseinrichtung für ein binärisiertes Objekt, die ein binärisiertes Objekt aus durch Binärisieren eines Graustufenbildes des Bildes erhaltenen Bilddaten extrahiert. Ferner umfasst die Fahrzeugüberwachungsvorrichtung eine Hindernisbestimmungseinrichtung, die bestimmt, ob ein anderer Körper, welcher ein Hindernis ist, zwischen der Infrarotabbildungseinrichtung und dem binärisierten Objekt vorhanden ist. Des Weiteren weist die Fahrzeugüberwachungsvorrichtung eine Höhenberechnungseinrichtung auf, die eine Höhenabmessung des binärisierten Objekts auf Grundlage der Höhenabmessung des Hindernisses im Graustufenbild berechnet, wenn bestimmt wird, dass ein Hindernis in einem Bestimmungsergebnis der Hindernisbestimmungseinrichtung vorhanden ist. Eine Objekttypbestimmungseinrichtung der Fahrzeugüberwachungsvorrichtung bestimmt einen Objekttyp auf Grundlage der Höhenabmessung des binärisierten Objekts.

Die Aufgabe, die der Erfindung zugrunde liegt, ist es, ein Verfahren und eine Vorrichtung zum Erkennen eines möglichen Kollisionsobjektes sowie ein Erkennungssystem für ein Kraftfahrzeug zu schaffen, die ein zuverlässiges Erkennen des möglichen Kollisionsobjektes ermöglichen bei unterschiedlichen Fahr- und/oder Verkehrsbedingungen für das Kraftfahrzeug und einen Beitrag leisten, eine Unfallwahrscheinlichkeit von Verkehrsteilnehmern zu reduzieren.

Die Aufgabe wird gelöst durch die Merkmale der unabhängigen Patentansprüche. Vorteilhafte Ausgestaltungen der Erfindung sind in den Unteransprüchen gekennzeichnet.

Gemäß einem ersten und zweiten Aspekt zeichnet sich die Erfindung aus durch ein Verfahren und eine korrespondierende Vorrichtung zum Erkennen eines möglichen Kollisionsobjektes in einem Bild, das von einer in einem Kraftfahrzeug angeordneten Aufnahmeeinheit erfasst wird. Die Aufnahmeeinheit ist hierbei ausgebildet, abhängig von dem erfassten Bild ein digitales Ursprungsbild mit einer vorgegebenen Bildgröße bereitzustellen. Es wird ein erstes Zwischenbild mit einer vorgegebenen ersten Zwischenbildgröße erzeugt durch ein Reduzieren einer Auflösung des Ursprungsbildes im Sinne eines Reduzierens von Bildpunkten. Des Weiteren wird ein zweites Zwischenbild derart erzeugt, dass es das erste Zwischenbild umfasst, wobei das zweite Zwischenbild die Bildgröße des Ursprungsbildes aufweist. Das zweite Zwischenbild wird mittels eines vorgegebenen Detektors ausgewertet, um zu prüfen, ob sich ein Objekt einer vorgegebenen Objektkategorie in dem zweiten Zwischenbild befindet, wobei der Detektor ausgebildet ist, einen vorgegebenen Bildausschnitt auszuwerten und ein Objekt einer vorgegebenen Objektkategorie mit einem vorgegebenen Objektgrößenbereich zu erkennen.

Unter einer Größe eines digitalen Bildes, eines Ausschnitts des digitalen Bildes oder eines Objektes in dem digitalen Bild wird im Rahmen der Erfindung eine horizontale und vertikale Ausdehnung des digitalen Bildes, des Ausschnitts beziehungsweise des Objektes innerhalb einer Bildebene gemessen in einer Anzahl von Bildpunkten verstanden.

Der Detektor umfasst beispielsweise jeweils einen Deskriptor und einen auf den Deskriptor angewendeten Klassifizierer. Hierbei charakterisiert der Deskriptor ein Merkmal oder eine Gruppe von Merkmalen in dem Bildausschnitt. Mittels des Klassifizierers kann beispielsweise ein Konfidenz-Intervall und/oder eine Wahrscheinlichkeit für ein Vorhandensein des Objekts in dem jeweiligen Bildausschnitt ermittelt werden und/oder eine Entscheidung darüber getroffen werden, ob das Objekt in dem jeweiligen Bildausschnitt enthalten ist oder nicht. Für das Erkennen des Objekts der vorgegebenen Objektkategorie wird der Detektor beispielsweise anhand von einer Vielzahl von Beispieldaten trainiert. Dieses Trainieren des Detektors kann daher sehr aufwendig sein. Eine Erkennungsleistung des Detektors kann abhängig sein von einer Objektgröße des zu erkennenden Objekts. Deshalb wird der Detektor beispielsweise so trainiert, dass er das Objekt der vorgegebenen Objektkategorie in einem anwendungsspezifischen Objektgrößenbereich zuverlässig erkennt.

Das Reduzieren der Auflösung des Ursprungsbildes ermöglicht, dass das von der Aufnahmeeinheit erfasste Bild mit einer Skalierung ausgewertet wird, sodass das Objekt der vorgegeben Objektkategorie eine Objektgröße aufweisen kann, die in dem Objektgrößenbereich liegen kann, in dem der Detektor das Objekt zuverlässig erkennen kann. Eine Anpassung des Detektors, die ansonsten für eine zuverlässige Erkennung des Objektes in dem Ursprungsbild mit dem Detektor notwendig wäre, ist nicht erforderlich. Vorteilhafterweise kann so ein minimaler Erkennungsabstand, d. h. ein minimaler Abstand zwischen einem realen Objekte und der Aufnahmeeinheit, bis zu dem das Objekt zuverlässig als mögliches Kollisionsobjekt erkannt werden kann, abhängig von einer Skalierung des Ursprungsbildes vorgegeben werden.

Vorteilhafterweise weist das zweite Zwischenbild die Bildgröße auf, die auch das Ursprungsbild aufweist, sodass eine Auswertung des zweiten Zwischenbildes mit einer geeignet ausgebildeten Programmroutine erfolgen kann, die auch für die Auswertung des Ursprungsbildes mittels des vorgegebenen Detektors genutzt werden kann.

In einer vorteilhaften Ausgestaltung wird, wenn das Objekt in dem zweiten Zwischenbild erkannt wird, abhängig von einem Abstand des Kraftfahrzeugs von dem Objekt und/oder einer Geschwindigkeit des Kraftfahrzeugs das Objekt als mögliches Kollisionsobjekt klassifiziert und ein Signal erzeugt zum Signalisieren einer vorgegebenen Warnung. Dies ermöglicht, einen Fahrzeugnutzer, insbesondere einen Fahrzeugführer, rechtzeitig auf eine Gefahr aufmerksam zu machen, sodass der Fahrzeugführer und/oder das Fahrzeug angemessen reagieren kann, eine Kollision zu vermeiden. Die Warnung kann beispielsweise mittels eines akustischen Signals, eines optischen Signals, und/oder eines haptischen Signals signalisiert werden.

In einer weiteren vorteilhaften Ausgestaltung wird ein erster Bildpunktwert ermittelt abhängig von Bildpunktwerten des Ursprungsbildes oder des ersten Zwischenbildes und verbleibende Bildpunkte des zweiten Zwischenbildes, die nicht von dem ersten Zwischenbild umfasst sind, weisen den ersten Bildpunktwert auf.

In einer weiteren vorteilhaften Ausgestaltung ist der erste Bildpunktwert repräsentativ für einen Mittelwert von näherungsweise allen Bildpunktwerten des Ursprungsbildes oder des ersten Zwischenbildes. Dies ermöglicht ein einfaches und schnelles Ermitteln des zweiten Zwischenbildes.

In einer weiteren vorteilhaften Ausgestaltung ist die Aufnahmeeinheit ausgebildet, ein Wärmebild zu erfassen. Die Aufnahmeeinheit kann beispielsweise eine Infrarotkamera umfassen. Vorteilhafterweise ermöglicht dies, dass wärmeabstrahlende Objekte, beispielsweise Lebewesen, insbesondere bei Nacht erkannt werden können. Die vorgegebene Objektkategorie kann hierzu spezifische Tierarten und/oder Personen umfassen.

In einer weiteren vorteilhaften Ausgestaltung umfasst die vorgegebene Objektkategorie vorgegebene Tierarten und/oder Fußgänger und/oder Fahrradfahrer, die sich im Randbereich einer Fahrbahn und/oder auf einer Fahrbahn befinden und/oder bewegen, auf der das Kraftfahrzeug fährt. Vorteilhafterweise ermöglicht dies, dass vorgegebene Tierarten und/oder Fußgänger und/oder Fahrradfahrer rechtzeitig erkannt werden können, die sich im Randbereich der Fahrbahn oder auf der Fahrbahn befinden oder bewegen, auf der das Kraftfahrzeug fährt.

In einer weiteren vorteilhaften Ausgestaltung wird die Auflösung des Ursprungsbildes reduziert durch eine Unterabtastung des Ursprungsbildes. Dies ermöglicht ein einfaches und schnelles Ermitteln des ersten Zwischenbildes.

In einer weiteren vorteilhaften Ausgestaltung ist die erste Zwischenbildgröße um einen vorgegebenen Faktor, der eine Quadratzahl repräsentiert, kleiner als die Bildgröße des Ursprungsbildes. Dies ermöglicht eine einfache Unterabtastung. Ferner kann sehr einfach eine Glättungsfilterung des Ursprungsbildes durchgeführt werden. Zum Beispiel kann ein Mittelwert ermittelt werden, zum Beispiel ein arithmetischer Mittelwert, von einem Bildausschnitt mit beispielsweise einer Breite von 2 Bildpunkten und einer Höhe von 2 Bildpunkten, und dieser Mittelwert bildet einen neuen Bildpunkt des ersten Zwischenbildes. So kann die Glättungsfilterung und die Unterabtastung in einem Schritt durchgeführt werden.

Gemäß einem dritten Aspekt zeichnet sich die Erfindung aus durch ein Erkennungssystem für ein Kraftfahrzeug. Das Erkennungssystem weist eine in dem Kraftfahrzeug angeordnete Aufnahmeeinheit auf, die ausgebildet ist, abhängig von einem von ihr erfassten Bild ein digitales Ursprungsbild mit einer vorgegebenen Bildgröße bereitzustellen. Ferner umfasst das Erkennungssystem eine in dem Kraftfahrzeug angeordnete Vorrichtung gemäß dem zweiten Aspekt zum Erkennen eines möglichen Kollisionsobjektes in dem von der Aufnahmeeinheit erfassten Bild. Hierbei gelten vorteilhafte Ausgestaltungen des ersten und zweiten Aspekts auch für den dritten Aspekt.

Ausführungsbeispiele der Erfindung sind im Folgenden anhand der schematischen Zeichnungen näher erläutert. Es zeigen:
- Figur 1: ein Blockdiagramm eines Erkennungssystems für ein Kraftfahrzeug,
- Figur 2: ein Ausführungsbeispiel eines Ursprungsbildes mit einem Objekt einer vorgegebenen Objektkategorie, das eine erste Objektgröße aufweist,
- Figur 3: ein weiteres Ausführungsbeispiel des Ursprungsbildes mit einem Objekt der vorgegebenen Objektkategorie, das eine zweite Objektgröße aufweist und
- Figur 4: ein zweites Zwischenbild.

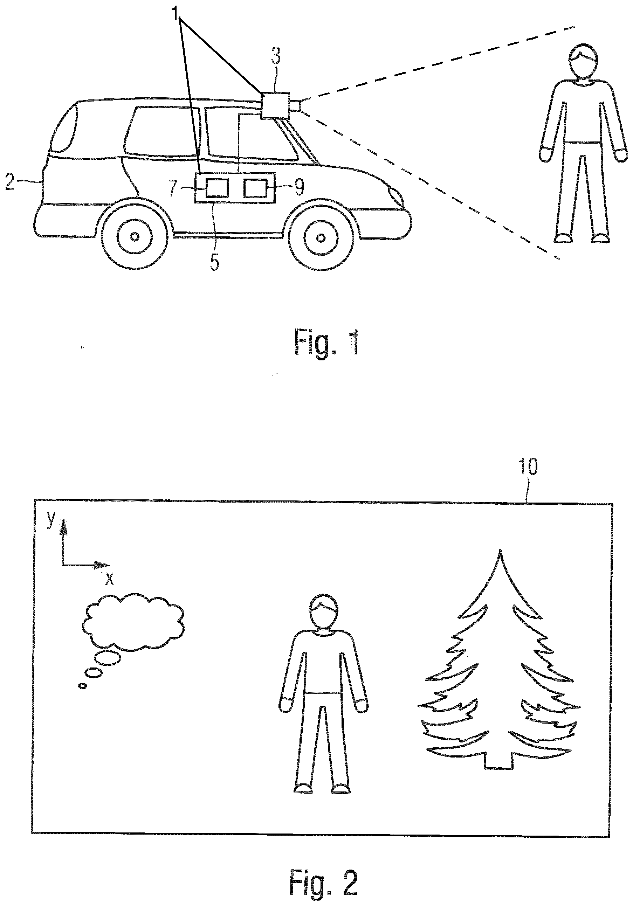

Figur 1 zeigt schematisch ein Erkennungssystem 1 für ein Kraftfahrzeug 2. Das Erkennungssystem 1 umfasst eine Aufnahmeeinheit 3 und eine Steuervorrichtung 5 mit einer Bildverarbeitungseinheit 7 und einer Auswerteeinheit 9. Die Steuervorrichtung 5 kann auch als Vorrichtung zum Erkennen eines möglichen Kollisionsobjektes bezeichnet werden. Das Erkennungssystem 1 ist beispielsweise in dem Kraftfahrzeug 2 angeordnet. Die Aufnahmeeinheit kann beispielsweise im Bereich eines Kühlergrills des Kraftfahrzeugs und/oder im Bereich eines Außenspiegels des Kraftfahrzeugs angeordnet sein. Das Erkennungssystem 1 umfasst vorzugsweise ein Nachtsichtsystem und die Aufnahmeeinheit 3 ist beispielsweise ausgebildet, ein Wärmebild zu erfassen. Beispielsweise kann die Aufnahmeeinheit 3 eine Infrarotkamera umfassen.

Die Aufnahmeeinheit 3 ist vorzugsweise derartig in dem Kraftfahrzeug 2 angeordnet, dass sie einen in Fahrzeugvorwärtsrichtung weisenden Erfassungsbereich aufweist. Die Aufnahmeeinheit 3 ist beispielsweise ausgebildet, abhängig von einem von ihr erfassten Bild ein digitales Ursprungsbild 10 mit einer vorgegebenen Bildgröße bereitzustellen. Das Ursprungsbild 10 wird beispielsweise für eine Weiterverarbeitung an die Bildverarbeitungseinheit 7 weitergeleitet.

Die Bildverarbeitungseinheit 7 ist beispielsweise ausgebildet, mittels eines vorgegebenen Detektors das Ursprungsbild 10 und/oder ein zweites Zwischenbild 30 auszuwerten, um zu prüfen, ob sich ein Objekt einer vorgegebenen Objektkategorie in dem Ursprungsbild 10 und/oder in dem zweiten Zwischenbild 30 befindet.

Die Auswerteeinheit 9 ist beispielsweise ausgebildet, wenn das Objekt in dem Ursprungsbild 10 und/oder in dem zweiten Zwischenbild 30 erkannt wird, abhängig von einem Abstand des Kraftfahrzeugs 2 von dem Objekt und/oder einer Geschwindigkeit des Kraftfahrzeugs 2 das Objekt als mögliches Kollisionsobjekt zu klassifizieren und ein Signal zu erzeugen, zum Signalisieren einer vorgegebenen Warnung. Die Auswerteeinheit 9 ist beispielsweise ausgebildet, abhängig von Erkennungsdaten der Bildverarbeitungseinheit 7 eine Wahrscheinlichkeit für eine Kollision mit einem weiteren Verkehrsteilnehmer und/oder einem anderen Objekt zu ermitteln, und falls erforderlich, eine Ausgabe von Warnsignalen zu veranlassen und/oder Sicherheitseinheiten des Kraftfahrzeugs 2 geeignet anzusteuern. Hierzu können beispielsweise Daten, die in Bezug auf das eigene Kraftfahrzeug 2 ermittelt werden, beispielsweise von einem Tachografen, genutzt werden. So kann eine Wahrscheinlichkeit für eine Kollision mit einem weiteren Verkehrsteilnehmer und/oder dem anderen Objekt ermittelt werden. Überschreitet beispielsweise die Wahrscheinlichkeit einen vorgegeben Grenzwert, wird das Signal zum Signalisieren einer vorgegebenen Warnung erzeugt. Alternativ oder zusätzlich kann die Klassifizierung des Objekts als mögliches Kollisionsobjekt abhängig von einem Lenkwinkel und/oder einer Gierrate des Kraftfahrzeugs 2 erfolgen.

Der Detektor ist beispielsweise ausgebildet, einen vorgegebenen Bildausschnitt des Ursprungsbildes 10 und/oder des zweiten Zwischenbildes 30 auszuwerten und das Objekt der vorgegebenen Objektkategorie mit einem vorgegebenen Objektgrößenbereich zu erkennen.

Die vorgegebene Objektkategorie kann beispielsweise vorgegebene Tierarten und/oder Fußgänger und/oder Fahrradfahrer umfassen, die sich im Randbereich einer Fahrbahn und/oder auf einer Fahrbahn befinden und/oder bewegen, auf der das Kraftfahrzeug 2 fährt. In den in den Figuren 1 bis 4 gezeigten Ausführungsbeispielen umfasst die Objektkategorie Personen, die sich im Randbereich der Fahrbahn und/oder auf einer Fahrbahn befinden und/oder bewegen, auf der das Kraftfahrzeug 2 fährt

Zum Erkennen eines möglichen Kollisionsobjektes in dem von der Aufnahmeeinheit 3 erfassten Bild kann beispielsweise das von der Aufnahmeeinheit 3 bereitgestellte Ursprungsbild 10 ausgewertet werden. Zum Auswerten des Ursprungsbildes 10 wird beispielsweise für eine Mehrzahl von Bildausschnitten, die jeweils eine vorgegebene Ausschnittsgröße und eine vorgegebene Position in dem Ursprungsbild 10 aufweisen, mittels des Detektors ausgewertet. Die Positionen in dem Ursprungsbild 10 können beispielsweise einen vorgegebenen Abstand aufweisen.

Alternativ oder zusätzlich kann zum Erkennen des möglichen Kollisionsobjektes in dem von der Aufnahmeeinheit 3 erfassten Bild, das zweite Zwischenbild 30 ausgewertet werden. Hierzu wird ein erstes Zwischenbild 20 mit einer vorgegebenen ersten Zwischenbildgröße erzeugt durch ein Reduzieren einer Auflösung des Ursprungsbildes 10 im Sinne eines Reduzierens von Bildpunkten. Das zweite Zwischenbild 30 wird derart mit der vorgegebenen Bildgröße erzeugt, dass es das erste Zwischenbild 20 umfasst. Das zweite Zwischenbild 30 wird mittels des Detektors analog zu dem Ursprungsbild 10 ausgewertet. Dies bedeutet, die Anzahl der Bildausschnitte, die ausgewertet werden, sind jeweils gleich, und die Ausschnittsgröße sowie die Positionen der Bildausschnitte sind gleich.

Verbleibende Bildpunkte des zweiten Zwischenbildes 30, die nicht von dem ersten Zwischenbild 20 umfasst sind, können beispielsweise einen ersten Bildpunktwert aufweisen, der abhängig von Bildpunktwerten des Ursprungsbildes 10 oder des ersten Zwischenbildes 20 ermittelt wird. Der erste Bildpunktwert kann beispielsweise repräsentativ sein für einen Mittelwert von näherungsweise allen Bildpunktwerten des Ursprungsbildes 10 oder des ersten Zwischenbildes 20.

Die Auflösung des Ursprungsbildes 10 wird beispielsweise reduziert durch eine Unterabtastung des Ursprungsbildes 10. Die erste Zwischenbildgröße ist beispielsweise um einen vorgegebenen Faktor, der eine Quadratzahl repräsentiert, kleiner als die Bildgröße des Ursprungsbildes 10. Der Faktor kann beispielsweise den Wert 4 aufweisen.

Abhängig von einem Abbildungsmaßstab der Aufnahmeeinheit 3 kann das Objekt in dem Ursprungsbild 10 eine bildbezogene Objektgröße aufweisen, die von einem Abstand der Aufnahmeeinheit 3 zu einem realen Objekt, das als das Objekt in dem Ursprungsbild 10 abgebildet ist, abhängt. Das Erkennungssystem 1 ist beispielsweise derart ausgebildet, dass, wenn das Ursprungsbild 10 mittels des Detektors ausgewertet wird, Personen in einem Abstand von der Aufnahmeeinheit 3 in Fahrzeugvorwärtsrichtung von maximal 100 m bis minimal 13 m zuverlässig erkannt werden. In diesem Zusammenhang kann die Aufnahmeeinheit 3 beispielsweise derart ausgebildet sein, dass das Objekt, beispielsweise eine Person mit einer durchschnittlichen Körpergröße, die in einem Abstand von ca. 13 m von der Aufnahmeeinheit 3 entfernt auf der Fahrbahn läuft, in dem Ursprungsbild 10 mit einer Objekthöhe von ca. 100 Bildpunkten in Richtung einer vertikalen Achse y des Ursprungsbildes 10 abgebildet wird. Der Detektor kann in diesem Zusammenhang beispielsweise derart ausgebildet sein, dass er das vorgegebene Objekt erkennen kann, wenn das Objekt die Objekthöhe von maximal 100 Bildpunkten in Richtung der vertikalen Achse y nicht überschreitet.

Für das Erkennungssystem 1 kann vorgesehen sein, dass ein vorgegebenes Warnsignal ausgegeben wird abhängig von einer verbleibenden Reaktionszeitdauer bis zu einer möglichen Kollision des Fahrzeugs mit dem Objekt. Beispielsweise kann vorgesehen sein, dass ein erstes Warnsignal signalisiert wird, wenn die verbleibende Reaktionszeitdauer ca. 2 Sekunden beträgt, und ein zweites Warnsignal signalisiert wird, wenn die verbleibende Reaktionszeitdauer ca. 1,4 Sekunde beträgt. Das erste Warnsignal kann beispielsweise derart signalisiert werden, dass es von einem Fahrzeugführer und/oder Fahrzeuginsassen als Vorwarnung wahrgenommen wird. Das zweite Warnsignal kann beispielsweise derart signalisiert werden, dass es von einem Fahrzeugführer und/oder Fahrzeuginsassen als Akutwarnung wahrgenommen wird. Infolge eines minimalen Erkennungsabstandes bis zu dem das Objekt zuverlässig erkannt wird, kann das erste Warnsignal erst ab einer ersten minimalen Geschwindigkeit des Kraftfahrzeugs 2 erzeugt werden. Der minimale Erkennungsabstand ist beispielsweise 13 m, wenn das Ursprungsbild 10 mittels des Detektors ausgewertet wird. Damit ergibt sich bei einer verbleibenden Reaktionszeitdauer von 2 Sekunden eine erste minimale Geschwindigkeit von 23 km/h. Unterschreitet das Kraftfahrzeug 2 diese erste minimale Geschwindigkeit, wird kein erstes Warnsignal signalisiert. In analoger Weise wird in diesem Fall bei dem minimalen Erkennungsabstand von 13 m das zweite Warnsignal erst ab einer zweiten minimalen Geschwindigkeit des Kraftfahrzeugs 2 von ca. 33 km/h erzeugt. Unterschreitet das Kraftfahrzeug 2 diese zweite minimale Geschwindigkeit, wird kein zweites Warnsignal signalisiert.

Durch eine Auswertung des zweiten Zwischenbildes 30 mit dem Detektor kann der minimale Erkennungsabstand reduziert werden. Beispielsweise kann die Auflösung des Ursprungsbildes 10 in vertikaler Richtung und in horizontaler Richtung beispielsweise jeweils auf die Hälfte reduziert werden, sodass das Objekt, das in dem Ursprungsbild 10 beispielsweise die bildbezogene Objekthöhe von 200 Bildpunkten in Richtung der vertikalen Achse aufweist und damit in dem zweiten Zwischenbild 30 die bildbezogene Objekthöhe von 100 Bildpunkten aufweist, von dem Detektor erkannt werden kann. So kann beispielsweise der minimale Erkennungsabstand auf ca. 6,5 m reduziert werden. Damit kann in einem Geschwindigkeitsbereich oberhalb von 11,5 km/h bereits ein erstes Warnsignal signalisiert werden und oberhalb von ca. 16,5 km/h kann das zweite Warnsignal signalisiert werden. Dies kann einen Beitrag leisten eine Verkehrsicherheit der Verkehrsteilnehmer zu erhöhen, insbesondere in Regionen und/oder Stadtgebieten im asiatischen Raum, z. B. China, in denen mit den Kraftfahrzeugen 2 durchschnittlich langsamer gefahren wird als in Europa und den USA und/oder in denen Personen gewohnt sind, in kürzeren Abständen vor einem Kraftfahrzeug 2 eine Straße zu überqueren.

Figur 2 zeigt ein Ausführungsbeispiel eines Ursprungsbildes 10 mit einem der Objekte der vorgegebenen Objektkategorie. Das Objekt weist eine erste Objektgröße auf. Bei dem Objekt handelt es sich beispielsweise um eine Person. Das Ursprungsbild 10 weist die vorgegebene Bildgröße auf, beispielsweise jeweils näherungsweise 400 Bildpunkte in Richtung einer horizontalen Achse x und jeweils näherungsweise 230 Bildpunkte in Richtung der vertikalen Achse y. Die Person weist beispielweise eine maximale Objekthöhe von 100 Bildpunkten auf in Richtung der vertikalen Achse y und kann somit von dem oben beispielhaft beschriebenen Detektor zuverlässig in dem Ursprungsbild 10 detektiert werden.

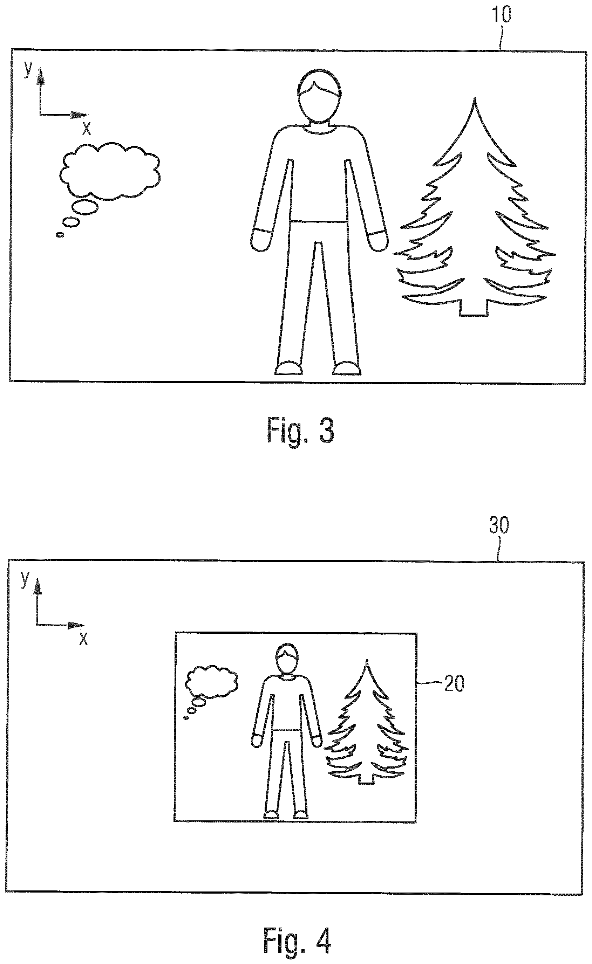

Figur 3 zeigt ein weiteres Ausführungsbeispiel des Ursprungsbildes 10 mit einem der Objekte der vorgegebenen Objektkategorie. Das Objekt weist eine zweite Objektgröße auf. Bei dem Objekt handelt es sich beispielsweise um eine Person. Das Ursprungsbild 10 weist die vorgegebene Bildgröße auf, beispielsweise jeweils näherungsweise 400 Bildpunkte in .Richtung einer horizontalen Achse x und jeweils näherungsweise 230 Bildpunkte in Richtung der vertikalen Achse y. Das Objekt, in diesem Falle die Person, weist beispielweise eine maximale Objekthöhe auf von 200 Bildpunkten in Richtung der vertikalen Achse y und kann somit nicht von dem oben beispielhaft beschriebenen Detektor zuverlässig in dem Ursprungsbild 10 detektiert werden.

Figur 4 zeigt das zweite Zwischenbild 30, das zu dem in Figur 3 gezeigten weiteren Ausführungsbeispiel des Ursprungsbildes 10 korrespondiert. Das zweite Zwischenbild 30 weist die Bildgröße des Ursprungsbildes 10 auf und umfasst das erste Zwischenbild 20. Die verbleibenden Bildpunkte des zweiten Zwischenbildes 20, die nicht von dem ersten Zwischenbild 10 umfasst sind, weisen den ersten Bildpunktwert auf, der beispielsweise den arithmetischen Mittelwert von näherungsweise allen Bildpunktwerten des weiteren Ursprungsbildes 10 repräsentiert. Die erste Zwischenbildgröße ist um einen Faktor 4 kleiner als die Bildgröße des Ursprungsbildes 10. Das Objekt, in diesem Falle die Person, weist in dem zweiten Zwischenbild 30 eine maximale Objekthöhe auf von 100 Bildpunkten in Richtung der vertikalen Achse y auf und kann somit zuverlässig von dem oben beispielhaft beschriebenen Detektor zuverlässig in dem zweiten Zwischenbild 30 detektiert werden.

### Bezugszeichenliste

- 1: Erkennungssystem
- 2: Kraftfahrzeug
- 3: Aufnahmeeinheit
- 5: Steuervorrichtung
- 7: Bildverarbeitungseinheit
- 9: Auswerteeinheit
- 10: Ursprungsbild
- 20: erstes Zwischenbild
- 30: zweites Zwischenbild
- x: horizontale Achse
- y: vertikale Achse

## Patentansprüche

1. Verfahren zum Erkennen eines möglichen Kollisionsobjektes in einem Bild, das von einer in einem Kraftfahrzeug (2) angeordneten Aufnahmeeinheit (3) erfasst wird, wobei die Aufnahmeeinheit (3) ausgebildet ist, abhängig von dem erfassten Bild ein digitales Ursprungsbild (10) mit einer vorgegebenen Bildgröße bereitzustellen, bei dem
- ein erstes Zwischenbild (20) mit einer vorgegebenen ersten Zwischenbildgröße erzeugt wird durch ein Reduzieren einer Auflösung des Ursprungsbildes (10) im Sinne eines Reduzierens von Bildpunkten,
- ein zweites Zwischenbild (30) derart erzeugt wird, dass es das erste Zwischenbild (20) umfasst, wobei das zweite Zwischenbild die Bildgröße des Ursprungsbildes aufweist, und
- das zweite Zwischenbild (30) mittels eines vorgegebenen Detektors ausgewertet wird, um zu prüfen, ob sich ein Objekt einer vorgegebenen Objektkategorie in dem zweiten Zwischenbild (30) befindet, wobei der Detektor ausgebildet ist einen vorgegebenen Bildausschnitt auszuwerten und ein Objekt einer vorgegebenen Objektkategorie mit einem vorgegebenen Objektgrößenbereich zu erkennen.

2. Verfahren nach Anspruch 1, bei dem,
wenn das Objekt in dem zweiten Zwischenbild (30) erkannt wird, abhängig von einem Abstand des Kraftfahrzeugs (2) von dem Objekt und/oder einer Geschwindigkeit des Kraftfahrzeugs (2) das Objekt als mögliches Kollisionsobjekt klassifiziert wird und ein Signal erzeugt wird zum Signalisieren einer vorgegeben Warnung.

3. Verfahren nach Anspruch 1 oder 2, bei dem
- ein erster Bildpunktwert ermittelt wird abhängig von Bildpunktwerten des Ursprungsbildes (10) oder des ersten Zwischenbildes (20) und
- verbleibende Bildpunkte des zweiten Zwischenbildes (30), die nicht von dem ersten Zwischenbild (20) umfasst sind, den ersten Bildpunktwert aufweisen.

4. Verfahren nach Anspruch 3, bei dem
der erste Bildpunktwert repräsentativ ist für einen Mittelwert von näherungsweise allen Bildpunktwerten des Ursprungsbildes (10) oder des ersten Zwischenbildes (20).

5. Verfahren nach einem der vorstehenden Ansprüche, bei dem die Aufnahmeeinheit (3) ausgebildet ist ein Wärmebild zu erfassen.

6. Verfahren nach einem der vorstehenden Ansprüche, bei dem die vorgegebene Objektkategorie vorgegebene Tierarten und/oder Fußgänger und/oder Fahrradfahrer umfasst, die sich im Randbereich einer Fahrbahn und/oder auf einer Fahrbahn befinden und/oder bewegen, auf der das Kraftfahrzeug (2) fährt.

7. Verfahren nach einem der vorstehenden Ansprüche, bei dem die Auflösung des Ursprungsbildes (10) reduziert wird durch eine Unterabtastung des Ursprungsbildes (10).

8. Verfahren nach einem der vorstehenden Ansprüche, bei dem die erste Zwischenbildgröße um einen vorgegebenen Faktor, der eine Quadratzahl repräsentiert, kleiner ist als die Bildgröße des Ursprungsbildes (10).

9. Vorrichtung zum Erkennen eines möglichen Kollisionsobjektes in einem Bild, das von einer in einem Kraftfahrzeug (2) angeordneten Aufnahmeeinheit (3) erfasst wird, wobei die Aufnahmeeinheit (3) ausgebildet ist, abhängig von dem erfassten Bild ein digitales Ursprungsbild (10) mit einer vorgegebenen Bildgröße bereitzustellen, und die Vorrichtung ausgebildet ist:
- ein erstes Zwischenbild (20) mit einer vorgegebenen ersten Zwischenbildgröße zu erzeugen durch ein Reduzieren einer Auflösung des Ursprungsbildes (10) im Sinne eines Reduzierens von Bildpunkten,
- ein zweites Zwischenbild (30) derart zu erzeugen, dass es das erste Zwischenbild (20) umfasst, wobei das zweite Zwischenbild die Bildgröße des Ursprungsbildes aufweist, und
- das zweite Zwischenbild (30) mittels eines vorgegebenen Detektors auszuwerten, um zu prüfen, ob sich ein Objekt einer vorgegebenen Objektkategorie in dem zweiten Zwischenbild (30) befindet, wobei der Detektor ausgebildet ist, einen vorgegebenen Bildausschnitt auszuwerten und ein Objekt einer vorgegebenen Objektkategorie mit einem vorgegebenen Objektgrößenbereich zu erkennen.

10. Erkennungssystem (1) für ein Kraftfahrzeug (2), bei dem das Erkennungssystem (1) aufweist:
- eine in dem Kraftfahrzeug (2) angeordnete Aufnahmeeinheit (3), die ausgebildet ist, abhängig von einem von ihr erfassten Bild ein digitales Ursprungsbild (10) mit einer vorgegebenen Bildgröße bereitzustellen,
- eine in dem Kraftfahrzeug (2) angeordnete Vorrichtung gemäß Anspruch 9 zum Erkennen eines möglichen Kollisionsobjektes in dem von der Aufnahmeeinheit (3) erfassten Bild.

## Claims

1. A method for identifying a possible collision object in an image captured by a recording unit (3) arranged in a motor vehicle (2), wherein the recording unit (3) is designed to provide a digital source image (10) of a predefined image size depending on the captured image, in which method
- a first intermediate image (20) of a predefined first intermediate image size is generated by reducing a resolution of the source image (10) in the sense of a reduction of pixels,
- a second intermediate image (30) is generated in such a way that it comprises the first intermediate image (20), wherein the second intermediate image has the image size of the source image, and
- the second intermediate image (30) is evaluated by means of a provided detector in order to check whether an object of a predefined object category is located in the second intermediate image (30), wherein the detector is designed to evaluate a predefined image detail and to identify an object of a predefined object category of a predefined object size range.

2. A method according to claim 1, in which
when the object is identified in the second intermediate image (30) the object is classified as a possible collision object depending on a distance of the motor vehicle (2) from the object and/or a speed of the motor vehicle (2), and a signal is generated in order to signal a predefined warning.

3. A method according to claim 1 or 2, in which
- a first pixel value is determined depending on pixel values of the source image (10) or of the first intermediate image (20), and
- remaining pixels of the second intermediate image (30) which are not comprised by the first intermediate image (20) have the first pixel value.

4. A method according to claim 3, in which
the first pixel value is representative for an average value of approximately all pixel values of the source image (10) or of the first intermediate image (20).

5. A method according to any one of the preceding claims, in which the recording unit (3) is designed to detect a thermal image.

6. A method according to any one of the preceding claims, in which the predefined object category comprises predefined animal types and/or pedestrians and/or cyclists located and/or moving in the edge region of a carriageway and/or on a carriageway on which the motor vehicle (2) is travelling.

7. A method according to any one of the preceding claims, in which the resolution of the source image (10) is reduced by an undersampling of the source image (10).

8. A method according to any one of the preceding claims, in which the first intermediate image size is smaller than the image size of the source image (10) by a predefined factor, which represents a square number.

9. A device for identifying a possible collision object in an image captured by a recording unit (3) arranged in a motor vehicle (2), wherein the recording unit (3) is designed to provide a digital source image (10) of a predefined image size depending on the captured image, and the device is designed:
- to generate a first intermediate image (20) of a predefined first intermediate image size by reducing a resolution of the source image (10) in the sense of a reduction of pixels,
- to generate a second intermediate image (30) in such a way that it comprises the first intermediate image (20), wherein the second intermediate image has the image size of the source image, and
- to evaluate the second intermediate image (30) by means of a predefined detector in order to check whether an object of a predefined object category is located in the second intermediate image (30), wherein the detector is designed to evaluate a predefined image detail and to identify an object of a predefined object category of a predefined object size range.

10. An identification system (1) for a motor vehicle (2), in which the identification system (1) comprises:
- a recording unit (3), which is arranged in the motor vehicle (2) and which is designed to provide a digital source image (10) of a predefined image size depending on an image captured by the recording unit,
- a device according to claim 9 arranged in the motor vehicle (2) for identifying a possible collision object in the image detected by the recording unit (3).

## Revendications

1. Procédé permettant d'identifier un objet de collision possible dans une image qui est détectée par une unité de capture d'image (3) montée dans un véhicule automobile (2), l'unité de capture d'image (3) étant réalisée pour permettre de fournir en fonction de l'image détectée, une image originelle numérique (10) ayant une taille d'image prédéfinie, procédé selon lequel :
- une première image intermédiaire (20) ayant une première taille d'image intermédiaire prédéfinie, est produite par une réduction de la résolution de l'image originelle (10) dans le sens d'une réduction de points d'image ;
- une seconde image intermédiaire (30) est produite de sorte qu'elle comprenne la première image intermédiaire (20), la seconde image intermédiaire ayant la taille d'image de l'image originelle, et
- la seconde image intermédiaire (30) est exploitée au moyen d'un détecteur prédéfini pour vérifier si un objet appartenant à une catégorie d'objets prédéfinie se trouve dans la seconde image intermédiaire (30), le détecteur étant réalisé pour exploiter une partie d'image prédéfinie et identifier un objet appartenant à une catégorie d'objets prédéfinie ayant une plage de tailles d'objets prédéfinie.

2. Procédé conforme à la revendication 1, selon lequel, lorsque l'objet est identifié dans la seconde image intermédiaire (30), cet objet est classé en tant qu'objet de collision possible en fonction de sa distance du véhicule (2) et/ou de la vitesse du véhicule (2), et un signal est produit pour signaler une mise en garde donnée.

3. Procédé conforme à la revendication 1 ou 2, selon lequel :
- une première valeur de point d'image est déterminée en fonction de valeurs de points d'image de l'image originelle (10) ou de la première image intermédiaire (20), et
- les points d'image restant de la seconde image intermédiaire (30) qui ne sont pas entourés par la première image intermédiaire (20) présentent la première valeur de point d'image.

4. Procédé conforme à la revendication 3, selon lequel la première valeur de point d'image est représentative de la valeur moyenne d'approximativement toutes les valeurs de points d'image, de l'image originelle (10) ou de la première image intermédiaire (20).

5. Procédé conforme à l'une des revendications précédentes, selon lequel l'unité de capture d'image (3) est réalisée pour détecter une image thermique.

6. Procédé conforme à l'une des revendications précédentes, selon lequel la catégorie d'objets prédéfinie comporte des types d'animaux pré-définis et/ou des piétons et/ou des cyclistes qui se trouvent et/ou se déplacent dans la zone du bord d'une chaussée et/ou sur une chaussée sur laquelle le véhicule (2) circule

7. Procédé conforme à l'une des revendications précédentes, selon lequel la résolution de l'image originelle (10) est réduite par un sous échantillonnage de l'image originelle (10).

8. Procédé conforme à l'une des revendications précédentes, selon lequel la première taille d'image intermédiaire est plus petite que la taille d'image, de l'image originelle (10) d'un facteur prédéfini qui représente un nombre au carré.

9. Dispositif permettant d'identifier un objet de collision possible dans une image qui est détectée par une unité de capture d'image (3) montée dans un véhicule automobile (2), l'unité de capture d'image (3) étant réalisée pour permettre de fournir en fonction de l'image détectée, une image originelle numérique (10) ayant une taille d'image prédéfinie, et le dispositif est réalisé pour :
- produire une première image intermédiaire (20) ayant une première taille d'image intermédiaire prédéfinie par une réduction de la résolution de l'image originelle (10) dans le sens d'une réduction de points d'image,
- produire une seconde image intermédiaire (30) de sorte quelle comprenne la première image intermédiaire (20), la seconde image intermédiaire ayant la taille d'image de l'image originelle, et
- exploiter la seconde image intermédiaire (30) au moyen d'un détecteur prédéfini pour vérifier si un objet appartenant à un catégorie d'objets prédéfinie se trouve dans la seconde image intermédiaire (30), le détecteur étant réalisé pour exploiter une partie d'image prédéfinie et identifier un objet appartement à une catégorie d'objets prédéfinie ayant une plage de tailles d'objets prédéfinie.

10. Système d'identification (1) destiné à un véhicule (2) comprenant :
- une unité de capture d'image (3) montée dans le véhicule (2) qui est réalisée pour permettre de fournir en fonction d'une image détectée par celle-ci, une image originelle numérique (10) ayant une taille d'image prédéfinie,
- un dispositif conforme à la revendication 9, monté dans le véhicule (2) pour permettre d'identifier un objet de collision possible dans l'image détectée par l'unité de capture d'image (3).
